# EUROPÄISCHE PATENTSCHRIFT

(11) **EP 2 650 257 B1**
(45) Veröffentlichungstag und Bekanntmachung des Hinweises auf die Patenterteilung: **17.10.2018**
(21) Anmeldenummer: 13156758.8
(22) Anmeldetag: 26.02.2013
(51) Int. Cl.: C01B 3/06, C01B 3/38, C01B 3/48, C07C 29/152, C07C 31/04

(54) **VORRICHTUNG ZUR SYNTHESE VON REGENERATIVEM METHANOL AUS CO2-HALTIGEM METHANGAS**
DEVICE FOR THE SYNTHESIS OF REGENERATIVE METHANOL FROM METHANE GAS CONTAINING CO2
DISPOSITIF DE SYNTHÈSE DE MÉTHANOL RÉGÉNÉRATIF À PARTIR DE GAZ MÉTHANE CONTENANT DU CO2

(30) Priorität: 12.04.2012 EP 12163937
(43) Veröffentlichungstag der Anmeldung: 16.10.2013
(73) Patentinhaber: Silicon Fire AG, 6045 Meggen (CH)
(72) Erfinder: Meyer-Pittroff, Roland, 85354 Freising (DE)
(74) Vertreter: Heusch, Christian

(56) Entgegenhaltungen:
- WO-A1-98/58874
- WO-A1-2012/045349
- WO-A1-2012/045373

## Beschreibung

Die vorliegende Anmeldung betrifft Vorrichtungen zur Synthese von Methanol aus Methangas, das Kohlendioxid enthält. Vorzugsweise kommt Biogas und/oder Sauer-Erdgas zum Einsatz.

"Biogas" ist der allgemeine Begriff für das gasförmige Reaktionsprodukt der anaeroben (luftfreien) bakteriellen Fermentation von Biomasse im wässrigen Milieu. Je nach Herkunft sind für dieses Gas auch andere Namen gebräuchlich. In der Natur laufen anaerobe Fermentationsprozesse in größtem Umfang unter Bildung von "Sumpf- oder Faulgas" ab. Entsprechende Prozesse laufen auch in den Verdauungstrakten von Menschen und Tieren, insbesondere von Wiederkäuern, ab. In Mülldeponien entsteht "Deponiegas", in den Faultürmen von Kläranlagen "Faulgas" oder "Klärgas".

Im Folgenden werden vor allem Faulgas, Klärgas, Sumpfgas, Fermentationsgas, und Gas aus der Tierhaltung als Biogas bezeichnet.

Die Hauptbestandteile von Biogas sind Methan (CH4) und Kohlendioxid (CO₂) in Gasform. Außerdem umfassen derartige Biogase im Prozentbereich Beimengungen oder Anteile wie Wasserdampf, Stickstoff, Schwefelwasserstoff und Ammoniak. Der Methananteil des Biogases schwankt je nach Situation und Herkunft (z.B. je nach Einsatzsubstraten und Fermentationsbedingungen) zwischen 40 und 80 Vol.-%. Als Mittelwert sind 60 Vol.-% Methananteil üblich. Bei Vernachlässigung oder Entfernung der Beimengungen liegt der CO₂-Anteil typischerweise bei ca. 40 Vol.-%. Ein Biogas mit ca. 60 Vol.-% Methananteil und ca. 40 Vol.-% CO₂-Anteil wird hier als Modellgas bezeichnet.

Das Biogas, das hier zum Einsatz kommen soll, zeichnet sich weiterhin dadurch aus, dass es in Sauerstoff haltiger Atmosphäre brennt. Das Biogas der Erfindung kann aus organischen Abfällen oder aus nachwachsenden Rohstoffen bereit gestellt werden. Es kann aber auch, wie angedeutet, tierischen Ursprungs sein. Je nach Situation kann das Biogas auch eine Mischung von zwei oder mehr verschiedenen Gasanteilen sein. Die Bezeichnung Biogas wird hier zusammenfassend für energiereiche, Methan haltige Gase verwendet, die aus organischen Stoffen entstanden sind und die per-se einen deutlichen CO₂-Anteil umfassen.

Biogase werden bisher meist eingesetzt, um durch Verbrennen in einem Blockheizkraftwerk (BHKW) Strom und Wärme bereit zu stellen. Es ist jedoch ein Problem, dass die Biogasanlagen oft sehr dezentralisiert (z.B. auf Bauernhöfen oder Kläranlagen)errichtet werden müssen, um die Transportwege für das Ausgangssubstrat zu verringern . Um das Biogas sinnvoll nutzen zu können, wird es daher meist vor Ort in kleineren bis mittelgroßen BHKW umgesetzt. Dabei kann die Wärme oft nicht oder nur teilweise genutzt werden, was aus Sicht der Ökobilanz nicht ideal ist.

Will man Biogas zu größeren Verbrauchern leiten, so kann eine Einspeisung und ein Transport über Erdgasleitungen erfolgen. Zu diesem Zweck wird das Biogas meist am Ort des Vorkommens gereinigt. Beim Reinigen wird zum Beispiel der CO₂-Anteil entfernt und in die Luft emittiert. Dieser Ansatz erscheint heutzutage nicht mehr sinnvoll, da man bemüht ist, die Emission von Treibhausgasen zu reduzieren. Ausserdem sind meist weitere Aufbereitungsschritte notwendig, um z.B. Schwefelwasserstoff zu entfernen, damit die Erdgasleitungen und Armaturen nicht korrodieren und um die Erdgasqualitäts-Anforderungen zu erfüllen.

Es ist auch möglich, Biogas als nahezu CO₂-neutralen Treibstoff in Kraftfahrzeugmotoren zu nutzen. Auch hier ist eine Aufbereitung auf Erdgasqualität sinnvoll, wobei der CO₂-Anteil weitestgehend entfernt werden muss. Weiterhin muss das aufbreitete Biogas dann auf 200 bar und mehr verdichtet werden, um gespeichert und in umgerüsteten Kraftfahrzeugmotoren genutzt werden zu können.

Ein weiteres Problem ist die Lagerbarkeit von Biogas, da der Energiegehalt (Heizwert) pro Volumen des Gases nur ca. 6 kWh pro Normkubikmeter beträgt. Dabei wäre das Lagern aus technischer Sicht im Prinzip problemlos. Wenn man jedoch die Wirtschaftlichkeit berücksichtigt, dann schlägt die relativ geringe volumetrische Energiedichte zu Buche.

Es besteht ein immer grösser werdender Bedarf zur sinnvollen Nutzung von Biogas.

Es gibt grosse Erdgasvorkommen, die ein sogenanntes saures Gas (im Englischen sour gas) oder Sauer-Erdgas liefern, das neben Methan auch CO₂ enthält. Das CO₂ wird auch hier als unerwünschte Beimengung betrachtet. Sauer-Erdgas kann bis zu 10 Vol.-% CO₂ enthalten, das vor dem Weitertransport oder der Verwendung des Erdgases meist in der Nähe der Förderquelle abgeschieden und in die Atmosphäre emittiert wird.

Es besteht auch der Bedarf zur sinnvolleren Nutzung von Sauer-Erdgas.

Sehr aktuell ist die Umwandlung von Wasserstoff, der über Elektrolyse aus regenerativen Stromüberschüssen gewonnen wird, zusammen mit Kohlendioxid aus konzentrierten Quellen, die das Kohlendioxid sonst in die Atmosphäre emittieren, in die einfach lager- und transportierbare und direkt, z.B. als Kraftstoff, verwendbare Flüssigkeit Methanol. Diese Umwandlung verspricht wesentlich größere Wirtschaftlichkeit als das konkurrierende Power-to-Gas-Verfahren der Herstellung von gasförmigem Methan.

Methanol mit regenerativer Ausgangsbasis ist ein synthetischer regenerativer Kraftstoff, der z.B. Biokraftstoffe ergänzen oder substituieren kann. Methanol und Ethanol sind als Beimischung zu Otto-Kraftstoff quasi austauschbar; Methanol kann bei Verwendung zur Einspritz-Ladeluftkühlung auch bei aufgeladenen Dieselmotoren über 20 % des Dieselkraftstoff-Heizwertes substituieren.

Dem Dokument WO 98/58874 A1, das am 30.12.1998 publiziert wurden, sind unter anderem Details zur autothermen Reformierung flüssiger und gasförmiger Kohlenwasserstoffe beschrieben.

In dem Dokument WO 2012/045349 A1, das am 12.4.2012 publiziert wurde, sind Details zur Synthese von Kohlenwasserstoff, hier speziell von Methanol, beschrieben.

In dem Dokument WO 2012/045373 A1, das am 12.4.2012 publiziert wurde, sind Details zur integrierten Synthese von Methanol beschrieben. Dabei geht es speziell um das gleichzeitige Bereitstellen von elektrischen Energie und Methanol.

Die Herstellung von regenerativem Methanol nur aus fluktuierenden regenerativen Stromquellen wie Solar und Wind stößt allerdings auf ganz erhebliche wirtschaftliche und anlagenbetriebliche Probleme, da die verwertbare elektrische Überschussenergie nur zeitlich sehr begrenzt zur Verfügung steht. Zum Nachteil der ohnehin relativ hohen Stromerzeugungskosten aus Solar und Wind kommt eine sehr kurze Anlagen-Betriebsdauer, die zu sehr hohen spezifischen Anlage-Kapitalkosten für das Produkt führt, vor allem aber zu massiven betrieblichen Problemen, resultierend aus dem instationären Betrieb der Chemieanlagen, der nur durch außerordentlich aufwändige Synthesegas-, vor allem aber auch Wasserstoff-Speicher ausgeglichen werden könnte.

Deshalb ist für die Methanolerzeugung in großem industriellen Umfang auf der Basis von Solar- und Windenergie die Einbeziehung zusätzlicher speicherbarer Energiequellen eine wirtschaftliche und betriebliche Notwendigkeit, wie die vorliegende Erfindung zeigt.

Eine Zielsetzung der Erfindung ist, aus einem gegebenen Gasgemisch (z.B. aus Biogas und/oder Sauer-Erdgas) geeignete Synthesegas-Zusammensetzungen für die Methanolsynthese zu erzeugen.

Insbesondere geht es darum, Methanol zu synthetisieren, das als regenerativ eingestuft werden kann. Dieses Methanol wird hier als "regeneratives" Methanol bezeichnet, auch wenn es nur zu einem Teil im Sinne des Wortes als regenerativ zu betrachten ist.

Gemäss Erfindung geht es insbesondere um eine Vorrichtung zum Herstellen von "regenerativem" Methanol auf der Basis von Kohlendioxid haltigem Methangas. Eine entsprechende Vorrichtung umfasst die Merkmale des Anspruch 1.

Das für die Methanol-Synthese erforderliche stöchiometrisch geeignete Einsatzgas kann bei allen Ausführungsformen zum Beispiel aus dem ersten Synthesegas gewonnen werden, indem fehlende Anteile (z.B. CO₂ oder H₂) hinzugefügt wird/werden oder indem überschüssige Anteile (z.B. verbliebenes CH4 des ursprünglich dem CO₂-Reformer zugeführten Modellgases) abgetrennt werden.

Gemäss Erfindung kommt Faulgas, Klärgas, Sumpfgas, Fermentationsgas oder Sauer-Erdgas oder eine Mischung aus mindestens zwei dieser Gase als Kohlendioxid haltiges Methangas zum Einsatz.

Die Vorrichtung umfasst eine Mischanlage, um aus dem Kohlendioxid haltigen Methangas/en ein Modellgas zu erhalten, das mindestens 50 Vol.-% Methan und mindestens 30 Vol.-% CO₂ umfasst, wobei das Modellgas vorzugsweise ca. 60 Vol.-% Methan und ca. 40 Vol.-% CO₂ umfasst. Falls das Modellgas einen zu hohen Methananteil haben sollte, so kann überschüssiger Methananteil an der Ausgangsseite eines CO₂-Reformers abgetrennt und einem anderen Anlagenteil zugeführt werden.

Das Biogas, das hier zum Einsatz kommt, zeichnet sich dadurch aus, dass es in Sauerstoff haltiger Atmosphäre brennt. Bei einem Teil der Ausführungsformen wird daher auf die kontrollierte Verbrennung des Biogases oder eines Teils des Biogases gesetzt.

Die Erfindung propagiert die Einbeziehung von fossilen Kohlenwasserstoffen, wie Erdgas, zur Erzeugung von Synthesegas für die Synthese von "regenerativem" Methanol im entsprechenden Umfang (unter Berücksichtigung einschlägiger Richtlinien oder Gesetze). Besonders vorteilhaft ist allerdings die Einbeziehung von relativ gut speicherbaren biogenen Gasen wie Bio- und Klärgas, deren Energieinhalt nicht nur regenerativ ist, sondern die auch noch einen natürlichen Gehalt an biogenem CO₂ haben, das ebenfalls für die Methanolsynthese benötigt wird. Einen natürlichen CO₂-Gehalt haben auch saure Erdgase, deren unmittelbare Verwendung (vor der sonst üblichen Abscheidung des CO₂) für die Methanolherstellung sich deshalb ebenfalls anbietet.

Weitere vorteilhafte Ausführungsformen sind der Beschreibung, den Figuren und den abhängigen Ansprüchen zu entnehmen.

In den Zeichnungen sind verschiedene Aspekte der Erfindung schematisch dargestellt.
- Fig. 1A: zeigt eine schematische Abbildung eines Reaktors, der im Zusammenhang mit der vorliegenden Erfindung eingesetzt werden kann;
- Fig. 1B: zeigt ein schematisches Blockdiagramm eines ersten Syntheseverfahrens der Erfindung;
- Fig. 1C: zeigt ein schematisches Blockdiagramm eines zweiten Syntheseverfahrens der Erfindung;
- Fig. 2: zeigt eine schematische Abbildung eines Reaktors, der im Zusammenhang mit der vorliegenden Erfindung eingesetzt werden kann;
- Fig. 3: zeigt ein schematisches Blockdiagramm eines Elektrolyseverfahrens zum Bereitstellen von Wasserstoff und/oder Sauerstoff;
- Fig. 4: zeigt ein schematisches Blockdiagramm eines Silicon-Verfahrens zum Bereitstellen von Wasserstoff;
- Fig. 5: zeigt ein schematisches Blockdiagramm eines ersten beispielhaften Verfahrens der Erfindung zum Bereitstellen von regenerativem Methanol;
- Fig. 6: zeigt ein schematisches Blockdiagramm eines beispielhaften Verfahrens der Erfindung, bei dem CO₂ mit dem Kohlendioxid haltigen Methangas zusammengebracht wird, um ein geeignetes Modellgas zu erhalten. Der gezeigte Schritt ist optional.

Es kann bei allen Ausführungsformen der Erfindung Faulgas 1.1, Klärgas 1.2, Sumpfgas 1.3, Fermentationsgas 1.4, oder Gas 1.5 aus der Tierhaltung als Biogas 1 eingesetzt werden. Zwei oder mehr dieser Gase können auch miteinander kombiniert (zusammengeführt) werden. Diese Biogase 1 umfassen aber in jedem Fall CH4 und CO₂ (beides vorzugsweise natürlichen Ursprungs). Diese Biogase 1 werden hier als Kohlendioxid haltige Methangase 10 bezeichnet.

Vorzugsweise kommt bei allen Ausführungsformen biogenes Kohlendioxid haltiges Methangas 10 zum Einsatz.

Gemäss Erfindung kann bei allen Ausführungsformen aber auch Sauer-Erdgas 2 als Kohlendioxid haltiges Methangas 10 dienen. Das Sauer-Erdgas 2 kann auch mit einem oder mehreren der zuvor genannten Gase 1.1 bis 1.5 kombiniert (zusammengeführt) werden.

Im Folgenden werden die Grundlagen der verschiedenen Verfahren erläutert, die gemäss Erfindung und je nach Ausführungsform zum Einsatz kommen.

Die Synthese von Methanol aus Kohlendioxid haltigem Methangas 10 kann nach einem der folgenden bekannten Ansätze erfolgen. Dabei geht es hier um die Synthese von Methanol, das mindestens teilweise regenerativ ist. Als "regeneratives" Methanol 108 wird hier ein Methanol bezeichnet, das ein Treibhausgas-Minderungspotential gegenüber fossilen Vergleichskraftstoffen aufweist, das mindestens 35 % oder vorzugsweise mindestens 50 % beträgt. Besonders vorzugsweise beträgt das Treibhausgas-Minderungspotential mindestens 60 %. Diese Vorgaben stammen aus den EU-Richtlinien 2009/28/EG und 2009/30/EG.

Die Hauptreaktionen für die exotherme katalytische Synthese von Methanol sind:

CO₂ + 3H₂ = CH₃OH + H₂O (-49.6 kJ/mol bei 298 K) (Reaktion 1)

CO + 2H₂ = CH₃OH (-90.7 kJ/mol bei 298 K) (Reaktion 2).

Die Reaktion 1 kann besonders vorteilhaft in einer Anlage durchgeführt werden, die in der internationalen Patentanmeldung mit der Publikationsnummer WO2012045349A1 beschrieben wurde. Eine Anlage gemäss dieser internationalen Patentanmeldung kann ein Bestandteil der erfindungsgemässen (Gesamt-)Vorrichtung 100 sein.

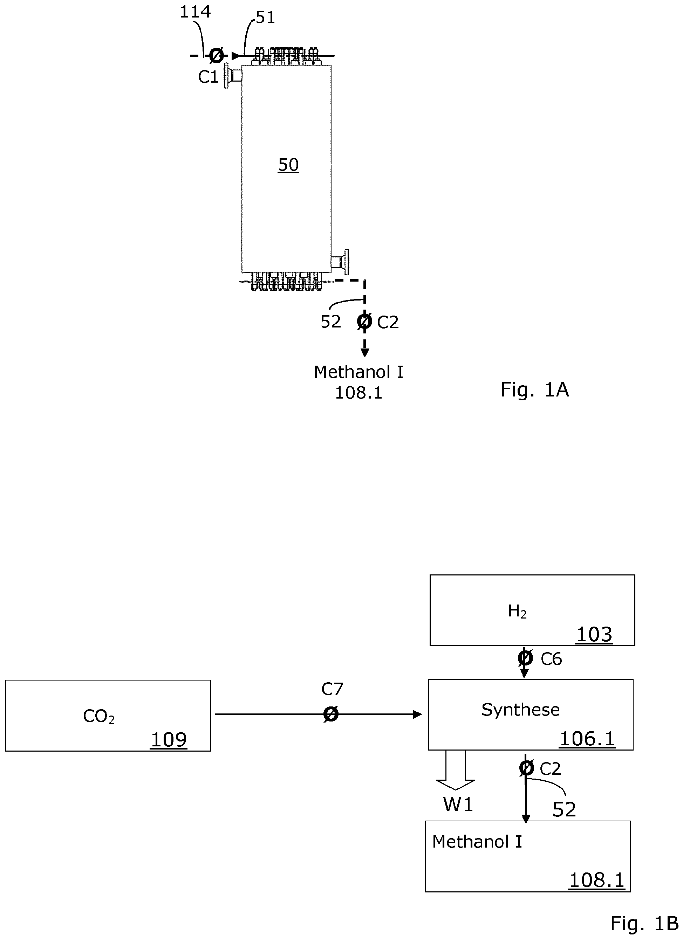

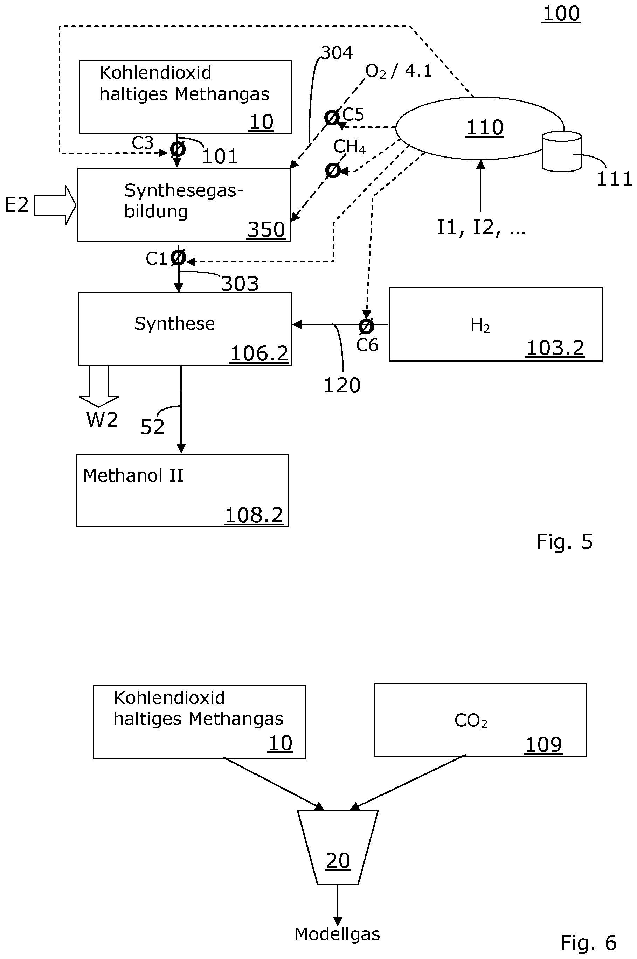

Fig. 1A zeigt in einer isolierten Darstellung einen möglichen Reaktor 50, der zum Durchführen einer exothermen katalytischen Synthese 106.1 nach Reaktion 1 ausgelegt ist. Der Reaktor 50 kann mit einem Synthesegas 114 versorgt werden, das in etwa die stöchiometrisch Zusammensetzung der Reaktion 1 hat. Falls erforderlich, können hier Wasserstoff 103 (zum Beispiel Wasserstoff 103.2 aus einer Wasserelektrolyse 105) und CO₂ aus einer natürlichen oder industriellen Quelle (z.B. aus einem der hier eingesetzten Gase oder Prozesse) zusammen gebracht werden, um die Stöchiometrie nach Reaktion 1 einstellen zu können. Der Reaktor 50 kann eine Gaszufuhr 51 und einen Methanolauslass 52 aufweisen, wie in Fig. 1A angedeutet. An dem Reaktor 50 sind an der Eingangsseite und der Ausgangsseite Regelelemente gezeigt, die jeweils durch ein **Ø** symbolisiert sind. Neben jedem dieser Regelelemente ist eine Bezeichnung (z.B. die Steuergrössen/-signale C1 und C2) angegeben, um darzustellen, dass die Regelelemente kontrolliert werden können. Dies geschieht vorzugsweise bei allen Ausführungsformen durch eine Steuerung 110 der (Gesamt)Vorrichtung 100, die in Fig. 5 beispielhaft angedeutet ist. Derartige Regelelemente sind auch in anderen Abbildungen gezeigt.

Fig. 1B zeigt ein entsprechendes Blockdiagramm einer Methanolsynthese 106.1 nach Reaktion 1. Das Synthesegas 114 setzt sich hier aus einer stöchiometrisch geeigneten Zusammensetzung von CO₂ 109 und Wasserstoff H₂103 zusammen. D.h. die stöchiometrische Zusammensetzung entspricht hier der Zusammensetzung, die in Reaktion 1 auf der linken Seite gezeigt ist. Im Rahmen der Synthese 106.1 wird Methanol I 108.1 erzeugt, das an einem Methanolauslass 52 entnommen werden kann. Die Synthese 106.1 ist exotherm und gibt daher Wärme W1 ab, wie durch einen Blockpfeil angedeutet.

Fig. 1B unterscheidet sich insofern von der Darstellung in Fig. 1A, als dass die einzelnen Anteile des Synthesegases 114 hier durch separate Boxen 109 und 103 dargestellt sind. Die Regelelemente und deren Steuergrössen/-signale C6 und C7 deuten an, dass die aktuelle Zusammensetzung des Synthesegases 114 bei Bedarf eingestellt werden kann (z.B. durch eine Steuerung 110).

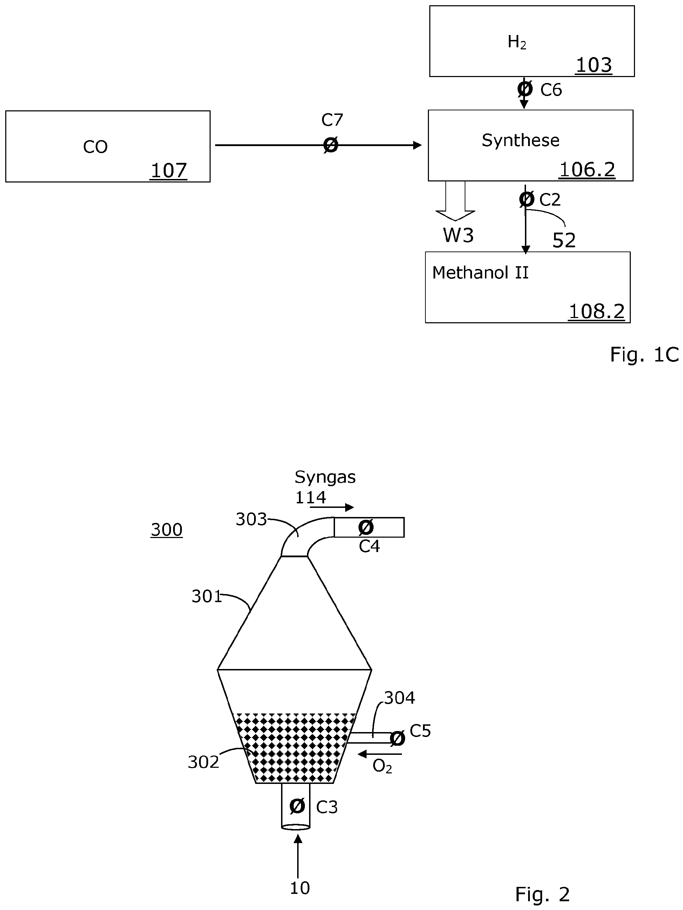

Fig. 1C zeigt ein entsprechendes Blockdiagramm einer Methanolsynthese 106.2 nach Reaktion 2. Das Synthesegas 114 setzt sich hier aus einer stöchiometrisch geeigneten Zusammensetzung von CO 107 und Wasserstoff H₂103 zusammen. D.h. die stöchiometrische Zusammensetzung entspricht hier der Zusammensetzung, die in Reaktion 2 auf der linken Seite gezeigt ist. Im Rahmen der Synthese 106.2 wird Methanol II 108.2 erzeugt, das z.B. an einem Methanolauslass 52 entnommen werden kann. Die Synthese 106.2 ist exotherm und gibt daher Wärme W3 ab, wie durch einen Blockpfeil angedeutet. Die Reaktion 2 kann in einem ähnlichen Reaktor stattfinden wie die Reaktion 1.

Es können aber auch andere Verfahren und Reaktoren eingesetzt werden, um die exotherme katalytische Synthese 106 von Methanol 108 durchzuführen.

Für die Zwecke der vorliegenden Anmeldung gehen wir von einem sogenannten Modellgas aus, das die folgende Zusammensetzung hat. Diese Annahme ist nicht einschränkend zu verstehen, sondern sie dient der einfacheren Erläuterung der chemischen und technischen Zusammenhänge.
60 Vol.-% CH₄ + 40 Vol.-% CO₂ entsprechend
0,6CH₄ + 0,4CO₂ bzw.
CH₄ + 0,667CO₂ (pro Mol CH₄ umfasst dieses Gas ca. 0,667 Mol CO₂)

Wie Erdgas wird auch Biogas 1 meist in Normkubikmetern (Norm)m³ gemessen. Bei 60 Vol.-% Methananteil und 40 Vol.-% CO₂-Anteil hat ein (Norm)m³ dieses Modellgases (bei 0 °C und 1 atm = ca. 1 bar) eine Masse von 1,213 kg, davon 0,428 kg CH4 und 0,785 kg CO₂. D.h., das Modellgas enthält 35,3 Mass.-% CH4 und 64,7 Mass.-% CO₂.

Die Zielsetzung ist, mit diesem Modellgas geeignete Synthesegas-Zusammensetzungen für die Methanolsynthese (nach Reaktion 1 und/oder 2) zu erzeugen. Da sich die Methanolsynthese (nach Reaktion 1 und/oder 2) nicht mit dem Modellgas speisen lässt, werden Verfahrensschritte bzw. Anlagenteile zwischen- bzw. vorgeschaltet, wie im Folgenden beschrieben wird.

Hier wird der Begriff "Synthesegas" 114 für eine Gaszusammensetzung verwendet, die Wasserstoff und mindestens eines der Bestandteile CO oder CO₂ enthält. Das Synthesegas 114 der Erfindung kann daher eine der folgenden Zusammensetzungen haben:
xCO2 + yH₂ oder
wCO + vH₂ oder
zCO₂ + nCO + mH₂.

Um eine geeignete Synthesegas-Zusammensetzung bereit zu stellen, bietet sich zunächst das endotherme CO₂ reforming ("dry" reforming) von Kohlendioxid haltigem Methangas an, das nach folgendem Prinzip abläuft:

CH₄ + CO₂ = 2CO + 2H₂ (+247 kJ/mol bei 298 K) (Reaktion 3).

Ein für das endotherme CO₂ reforming geeignetes Kohlendioxid haltiges Methangas umfasst mehr CO₂ als das Modellgas. Anders herum ausgedrückt, liefert die Reaktion 3 beim Einbringen des Modellgases auf der Ausgangsseite neben dem 2CO + 2H₂ auch einen Rest an Methan, da das Modellgas mehr Methan umfasst als für die Reaktion 3 erforderlich ist.

Die Reaktion 3 ist eine katalytische Reaktion, die besonders vorzugsweise im Temperaturbereich 350 bis 900 °C, meist bei Atmosphärendruck, statt findet. Besonders bevorzugt sind CO₂-Reformer 300, die einen Platin basierten Katalysator 302 (z.B. einen Pt/10%ZrO_{2/}Al₂O₃ Katalysator) oder einen Palladium basierten Katalysator 302 (z.B. einen Pd/Al₂O₃ Katalysator) aufweisen.

Ein CO₂-Reformer 300 hat vorzugsweise eine Reaktionskammer 301, die mit den gasförmigen Einsatzstoffen 10 der Reaktion 3 beschickt wird. Im Inneren der Reaktionskammer 301 umströmen die gasförmigen Einsatzstoffe 10 den Katalysator 302 und es findet die katalytische Reaktion 3 statt. Typischerweise im oberen Bereich des CO₂-Reformers 300 ist ein Auslass 303 für ein Synthesegas 114 vorgesehen. Hier kann das Synthesegas 114 entnommen werden. Die Zufuhr und/oder Entnahme können über Regelelemente C3 und C4 geregelt werden (z.B. durch eine Steuerung 110). Das Synthesegas 114 am Auslass 303 kann einen Teil CH₄ umfassen, wie bereits erwähnt.

Ein Hauptproblem ist beim Durchführen der Reaktion 3 die Deaktivierung des Katalysators 302 durch Verkokung. Die Zugabe von Sauerstoff 4 (O₂) zu dem CH4/CO₂-Gasgemisch 10, das als Speisegas für den CO₂-Reformer 300 eingesetzt wird, erhöht die CH₄-Konversion und die Katalysatorstabilität. In Fig. 2 ist daher eine optionale Sauerstoff-Zufuhr 304 gezeigt. Auch diese Zufuhr 304 kann regelbar sein (z.B. durch eine Steuerung 110), wie durch die Steuergrösse/-signal C5 dargestellt.

Vorzugsweise hat der CO₂-Reformer 300 daher bei allen Ausführungsformen einen Eingang (Sauerstoff-Zufuhr 304 genannt) zum Einbringen von Sauerstoff 4 (z.B. Sauerstoff 4.1 aus einer Wasser-Elektrolyse 105).

Die Anwesenheit von Sauerstoff 4 kann auch zur totalen Oxidation von CH4 führen (die Reaktion 4 ist exotherm), wie in der folgenden

Reaktionsgleichung ausgedrückt:

CH₄ + 2O₂ = CO₂ + 2H₂O (-802 kJ/mol bei 298 K) (Reaktion 4)

oder, bei niedrigeren Temperaturen und/oder Sauerstoffmangel, kann die Anwesenheit von Sauerstoff 4 zu einer partiellen CH4-Oxidation führen:

CH₄ + 0,5O₂ = CO + 2H₂ (-36 kJ/mol bei 298 K) (Reaktion 5).

Auch möglich ist die sogenannte water-gas shift Reaktion 6. Die Reaktion 6 ist endotherm.

CO₂ + H₂ = CO + H₂O (+41 kJ/mol bei 298 K) (Reaktion 6).

Bei Anwesenheit oder Zugabe von Wasserdampf (H₂O) kann auch das sogenannte endotherme steam reforming von CH4 ablaufen, wie in Gleichung 7 dargelegt:

CH4 + H₂O (g) = CO + 3H₂ (+206 kJ/mol bei 298 K) (Reaktion 7)

Zusätzlich kann die im Folgenden gezeigte exotherme Kohlenoxid-Konvertierung statt finden:

CO + H₂O (g) = CO₂ + H₂ (-41,19 kJ/mol bei 298 K) (Reaktion 8).

Alle Reaktionen 4 - 8 liefern Synthesegase 114 nach der hier verwendeten Definition. D.h. die Produkte dieser Reaktionen 4 - 8 liefern die Gasbestandteile, die für die Methanolsynthese gemäß Reaktionen 1 und/oder 2 geeignet sind.

Die Reaktionen 4 - 8 werden vorzugsweise alle zusammen in einem Reaktor (z.B. im Reaktor 301 der Fig. 2) durchgeführt, können aber auch in mehreren Reaktoren ablaufen. Alle Ausführungsformen der Erfindung können daher mit einem Reaktor (z.B. dem Reaktor 301 der Fig. 2) oder mit mehreren Reaktoren zum Durchführen der Reaktionen 4 - 8 ausgestattet sein.

Es zeigt sich allerdings, dass für die vollständige Umsetzung des vorhandenen oder erzeugten CO und CO₂ zu regenerativem Methanol 108 meist ein Wasserstoffmangel vorliegt. Man möchte das CO und CO₂ möglichst vollständig zu Methanol 108 umsetzen, da in diesen Molekülen der Kohlenstoff vorhanden ist, den es zum Synthetisieren des Methanols 108 braucht. Wenn man keine vollständige Umsetzung erzielt, dann werden ausgangsseitig Kohlenstoffatome (z.B. in Form von CO₂) in die Umwelt abgegeben.

Gemäss Erfindung wird/werden daher bei allen Ausführungsformen die Reaktion/en 4 - 8 mit einer Reaktion zur Wasserstofferzeugung kombiniert, um Wasserstoffmangel auf der Eingangsseite der Reaktionen 1 - 2 auszugleichen.

Alle Ausführungsformen umfassen daher eine Wasserstoffgaszufuhr 120 und optional auch eine Steuerung 110, die dazu ausgelegt ist, Wasserstoffgas 103.2
- mit dem ersten Synthesegas 114 zusammenzubringen, und/oder
- dem ersten Methanol-Synthesereaktor 50 zuzuführen, und/oder
- in einem Zwischenschritt einem Synthesegas 114 der Vorrichtung 100 beizumengen,
   um das Methanol-Syntheseverfahren (nach Reaktion 1 und/oder 2) bzw. die entsprechenden Anlagenteile (z.B. den Reaktor 50) der Vorrichtung 100 mit einem Gas der geeigneten Stöchiometrie speisen zu können.

Die Wasserstofferzeugung wird gemäss Erfindung vorzugsweise nach einem der folgenden beiden Ansätze/Prozesse durchgeführt.

Es kann ein Hydrogenprozess (hier auch Silicon-Verfahren genannt) und/oder ein Wasser-Elektrolyseprozess Anwendung finden.

Die Reaktionsgleichung des endothermen Wasser-Elektrolyseprozesses 105 ist:

H₂O (I) = H₂ (g) + 1/2O₂ (g) (+286,02 kJ/mol) (Reaktion 9).

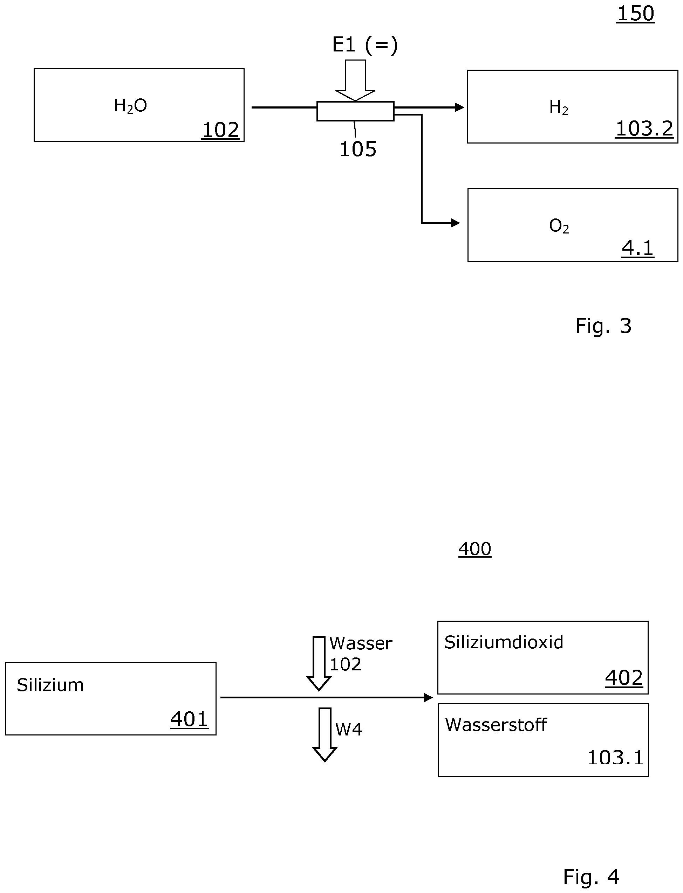

Eine entsprechende Blockdarstellung ist in Fig. 3 gezeigt. Der Wasser-Elektrolyseprozess 105 läuft unter Einsatz von Gleichstrom (E1 =) ab, der zum Speisen einer Elektrolysevorrichtung 150 eingesetzt wird. Die Wasserelektrolyse 105 hat den Vorteil, dass dafür regenerative Stromspitzen genutzt werden können, um die Elektrolysevorrichtung 150 zu speisen, und dass sie den für die Reaktionen 4 - 5 benötigten Sauerstoff 4.1 liefern kann.

Bei einem Teil der Ausführungsformen wird daher der Sauerstoff 4.1, der von der Elektrolysevorrichtung 150 bereit gestellt wird, an einen oder mehrere andere Anlagenteile der Vorrichtung 100 übergeben (z.B. an den Reformer 300 nach Fig. 2).

Das erwähnte Silicon-Verfahren 400 verläuft nach der exothermen Summenreaktion zwischen Silizium 401 (Si) und Wasser 102 (H₂O), wie in Fig. 4 in schematischer Form gezeigt und wie im Folgenden dargestellt:

Si (s) + 2H₂O (I) = SiO₂ (s) + 2H₂(g) (-339,5 kJ/mol) (Reaktion 10)

Im Rahmen des Silicon-Verfahrens 400 entstehen Siliziumdioxid 402 (SiO₂) und Wasserstoff 103.1. Ausserdem entsteht Wärme W4, die abgeführt und an einem anderen Ort der Vorrichtung 100 eingesetzt werden kann.

Dieses Silicon-Verfahren 400 läuft mit Hilfe von Natronlauge (NaOH) unter Bildung von Natriumsilikaten als Zwischenprodukten ab. Dieser Aspekt ist nicht in Fig. 4 gezeigt. Das Silicon-Verfahren 400 kann z.B. dann von Vorteil sein, wenn man unabhängig sein will von einer externen Stromversorgung. Details zu dem Silicon-Verfahren 400 sind zum Beispiel der publizierten internationalen Patentanmeldung zu WO2010/069685 A1 entnehmen.

Natürlich kann zur Erhöhung der Methanolproduktion über das vorhandene Biogas/Klärgas-Potential hinaus durch Zugabe von externem CO₂ aus konzentrierten industriellen Quellen zusätzliches Methanol gemäss der Reaktion 1 hergestellt werden.

Zur Erhöhung der Methanolproduktion und zum Decken des Energiebedarfs kann mindestens teilweise Sauer-Erdgas eingesetzt werden, wobei darauf zu achten ist, dass die Bedingungen für die Einstufung als regeneratives Methanol 108 eingehalten werden.

Nachdem nun wesentliche Aspekte und die zu Grunde liegenden chemischen und technischen Zusammenhänge beschrieben wurden, wird die Erfindung anhand von Beispielen weiter vertieft.

Gemäss Erfindung kommt eine Vorrichtung 100 zum Einsatz, die speziell zum Herstellen von regenerativem Methanol 108 auf der Basis von Kohlendioxid haltigem Methangas 10 ausgelegt ist. Vorzugsweise kommt bei allen Ausführungsformen biogenes Kohlendioxid haltiges Methangas 10 und/oder Sauer-Erdgas 2 zum Einsatz. Um so höher der Anteil biogener Einsatzstoffe, um so höher ist die Einstufung des Methanols 108 als regeneratives Methanol 108.

Die Vorrichtung 100 umfasst einen CO₂-Reformer 300, der mit dem Kohlendioxid haltigen Methangas 10 speisbar ist. Vorzugsweise hat das Kohlendioxid haltige Methangas 10 die Stöchiometrie der Reaktion 3. Der CO₂-Reformer 300 ist vorzugsweise bei allen Ausführungsformen zum Durchführen eines CO₂-Trocken-Reformationsverfahrens ausgelegt und der CO₂-Reformer 300 weist einen Ausgangsbereich 303 auf, in dem ein erstes Synthesegas 114 bereit gestellt wird. Der Prozess der Synthesegasbildung wird hier allgemein mit dem Bezugszeichen 350 bezeichnet und ist in Fig. 5 durch einen Block symbolisiert, der mit Kohlendioxid haltigem Methangas 10 und mit einem oder mehreren der folgenden Gase beschickt werden kann: O₂ 4.1, CH4 (falls das Kohlendioxid haltige Methangas 10 einen zu geringen CH4-Anteil haben sollte).

Es kommt ein erster Methanol-Synthesereaktor 50 zum Einsatz, der mit einem Einsatzgas speisbar ist, das dem ersten Synthesegas 114 entspricht oder das aus diesem gewonnen wird (z.B. durch Hinzufügen weiterer Bestandteile wie CO₂ und/oder H₂). Der Methanol-Synthesereaktor 50 ist bei allen Ausführungsformen zur exothermen katalytischen Synthese 106.1 von Methanol 108.1 nach Reaktion 1 und/oder zur exothermen katalytischen Synthese 106.2 von Methanol 108.2 nach Reaktion 2 ausgelegt.

Im Folgenden wird eine beispielhafte **Ausführungsform A** beschrieben, bei der das erfindungsgemässe regenerative Methanol 108 aus einem Biogas 1 unter Einsatz von Wasserstoff 103.2 und Sauerstoff 4.1 aus einer Elektrolyse 105 und unter Verwendung von Erdgas CH4 synthetisiert wird.

Das Modell-Biogas hat die Zusammensetzung CH4 + 0,667CO₂, d.h. zu einem Mol CH4 kommen noch 0,667 Mol CO₂.

Wird die Reaktion 3 des CO₂ reformings von CH4 kombiniert mit der Reaktion 5 der partiellen Oxidation von CH4, so ergibt sich die Summenreaktion:

0,667CH₄ + 0,667CO₂ + 0,333CH₄ +0,167O₂ = 1,334CO + 1,334H₂ + 0,333CO + 0,667H₂ = 1,666CO + 2,001H₂ (Reaktion 11).

Bei der Methanolsynthesereaktion 2 reagieren ein Mol CO mit zwei Molen H₂. Zur Sicherstellung dieses Molverhältnisses müssen in obiger Reaktionsgleichung 11 noch 1,666 x 2 - 2,001 = 1,331 Mol H₂ von extern zugegeben werden, z.B. aus der Elektrolyse 105 oder aus dem Silicon-Verfahren 400.

Bei der elektrolytischen Herstellung von 1,331 Mol H₂ entsteht gemäß Reaktion 9 die folgende Menge an Sauerstoff 4.1: 1,331 : 2 = 0,666 Mol O₂. Bei Abzug der für die partielle Oxidation in Reaktion 5 benötigten 0,167 Mol O₂, verbleiben aus der Elektrolyse 0,666 - 0,167 = 0,499 Mol O₂, die für eine partielle Oxidation von zusätzlichen 0,998 Mol CH4 aus Erdgas gemäß Reaktion 5 verwendet werden können:
0,998CH₄ + 0,499O₂ = 0,998CO + 1,996H₂.

Damit stehen bei Zufuhr von 1,000 Mol CH4 und 0,667 Mol CO₂ aus dem Modell-Biogas sowie 1,331 Mol H₂ und 0,666 Mol O₂ aus der Elektrolyse 105, sowie 0,998 Mol CH₄ aus Erdgas für die Methanolsynthese gemäß Reaktion 2 zur Verfügung:
(1,666 + 0,998)CO + (2,001 + 1,331 + 1,996)H₂ = 2,664CO + 5,328H₂,

womit sich 2,664 Mol regeneratives Methanol CH₃OH synthetisieren lassen.

In Fig. 5 ist ein Blockdiagramm einer Vorrichtung 100 gezeigt, die nach dem zuvor beschriebenen Ansatz funktioniert. Der Vorrichtung 100 wird eingangsseitig Modell-Biogas als Kohlendioxid haltiges Methangas 10 zugeführt. Hierzu ist eine Gaszufuhr 101 vorgesehen. In der Gaszufuhr 101 gilt die folgende Aussage:
1CH₄ + 0,667CO₂ = 0,667CH₄ + 0,667CO₂ + 0,333CH₄.

Um dieses Gasgemisch optimal zu regenerativem Methanol 108 umsetzen zu können, wird zur Bereitstellung eines Synthesegases 114 Sauerstoff 4 benötigt. Der Sauerstoff 4 kann z.B. als Sauerstoff 4.1 aus der Elektrolyse 105 entnommen werden. In Fig. 5 deutet ein gestrichelter Pfeil an, dass der Sauerstoff 4.1 in den Prozess zur Synthesegasbildung 350 eingebracht wird. Je nach Prozessführung des Prozesses 350 ist eventuell erforderlich, von aussen Energie zuzuführen. Dieser Aspekt ist in Fig. 5 dadurch dargestellt, dass im Blockdiagramm ein Blockpfeil E2 zum Prozess zur Synthesegasbildung 350 hin weist. Je nach Prozessführung des Prozesses 350 ist es erforderlich, von aussen CH4 (z.B. aus Erdgas) zuzuführen. Das Zuführen von CH4 ist in Fig. 5 durch einen weiteren gestrichelten Pfeil angedeutet.

Der Prozess zur Synthesegasbildung 350 kann zum Beispiel in einem Reformer 300 nach Fig. 2 ablaufen.

Am Ausgang 303 des Prozesses 350 (respektive der entsprechenden Reaktionsanlage 300) wird ein Synthesegas 114 mit der folgenden Zusammensetzung bereit gestellt:
2,664CO + 5,328H₂.

Diese Zusammensetzung des Synthesegases 114 eignet sich hervorragend, um in einem Rektor 50 ca. 2,664 Mol regeneratives Methanol (CHₛOH) zu synthetisieren. Dabei verläuft die Synthese 106.2 gemäss Reaktion 2. Da die Reaktion 2 exotherm ist, kann der Synthese 106.2, respektive dem Reaktor 50, Wärme W2 entnommen werden, wie in Fig. 5 durch eine Blockpfeil angedeutet. Das regenerative Methanol, das hier entsteht, wird mit dem Bezugszeichen 108.2 bezeichnet.

Falls im Rahmen des Prozesses 350 ein Mangel an Wasserstoff 103 bestehen sollte, kann z.B. Wasserstoff 103.2 aus einer Elektrolyse 105 und/oder Wasserstoff 103.1 aus einem Silicon-Verfahren 400 eingesetzt werden. In Fig. 5 ist das Zuführen von Wasserstoff 103.2 aus einer Elektrolyse 105 angedeutet. Die Zufuhrleitung ist mit 120 bezeichnet.

Der Einsatz von Wasserstoff 103 ist jedoch nicht immer erforderlich.

Der Wasserstoff 103 kann aber je nach Kohlendioxid haltigem Methangas 10, das als Ausgangsstoff zur Verfügung steht, an anderen Stellen der Vorrichtung 100 zum Einsatz kommen, wie zum Beispiel in der Reaktion 6 gezeigt.

Die Vorrichtung 100 umfasst vorzugsweise bei allen Ausführungsformen eine (Anlagen-)Steuerung 110, wie in Fig. 5 andeutungsweise gezeigt. Die Kontrollelement der verschiedenen Anlagenteile sind steuerungstechnisch mit der (Anlagen-)Steuerung 110 verbindbar. Die entsprechenden Signal- und/oder Sensorleitungen sind in Fig. 5 durch gestrichelte Pfeile dargestellt, die von der (Anlagen-)Steuerung 110 ausgehen und zu den einzelnen Kontrollelementen führen. Die (Anlagen-)Steuerung 110 umfasst vorzugsweise einen Speicher 111, in dem z.B. die Software der (Anlagen-)Steuerung 110 und/oder Parameter abgelegt sein können, die zum Steuern der Vorrichtung 100 erforderlich sind. Die (Anlagen-)Steuerung 110 kann auch von aussen mit Steuersignalen oder Parametern versorgt werden, wie in Fig. 5 durch die Bezeichnungen I1, I2, usw. angedeutet.

Anhand einiger Beispiele soll die Funktionsweise der Steuerung 110 beschrieben werden. Das mit C1 bezeichnete Kontrollelement regelt die Zufuhr des Synthesegases 114 zum Reaktor 50, in dem z.B. die Synthesereaktion 106.2 abläuft. Das mit C6 bezeichnete Kontrollelement regelt die Zufuhr von Wasserstoff 103.2 zum Reaktor 50, falls hier überhaupt Wasserstoff benötigt wird. Über ein optionales Kontrollelement C2 (siehe Fig. 1) kann die Entnahme von Methanol II 108.2 gesteuert werden.

Im Folgenden wird ein Beispiel einer Vorrichtung 100 beschrieben **(Ausführungsform A1** genannt), die in oder bei einer Kläranlage zum Einsatz kommt. Angenommen wird eine kommunale Kläranlage mit 40000 Einwohner-Gleichwerten EWG und einem Klärgasanfall von 5000 m³/d. Der Klärgasanfall ist relativ hoch, weil organische Co-Substrate zum Klärschlamm gegeben werden.

Nach obigen Reaktionsgleichungen liefern 1,000 + 0,667 mol = 1,667 mol Modellgas zusammen mit 1,331 Mol H₂ und 0,998 Mol CH4 aus Erdgas 2,664 mol Methanol 108, bzw. 1 Mol Modellgas ist die Basis für 2,664 : 1,667 = 1,598 mol Methanol 108.

223 kmol/d Modellgas sind die Basis für 356,4 kmol/d Methanol 108 oder 11404 kg/d Methanol = 14435 L/d Methanol.

Pro Mol Modellgas sind zusätzlich 1,331 : 1,667 = 0,798 mol Wasserstoff nötig; für 223 kmol/d Modellgas sind 223 x 0,798 = 178,0 kmol/d Wasserstoff erforderlich = 3990,1 m3/d H₂ = 166,3 m³/h H₂.

Das entspricht der Leistung von z.B. 2,8 Standard-Elektrolyseuren der Firma NEL Hydrogen AS (in Norwegen) mit einen Output von je 60 m³/h und mit einer elektrischen Anschlussleistung von 166,3 m³/h x 4,603 kWh/m³ = 765,3 kW.

Außerdem sind pro Mol Modellgas 0,998 : 1,667 = 0,599 Mol CH4 aus Erdgas notwendig. Bei 223 kmol/d Modellgas entspricht das 139,6 kmol/d CH4 aus Erdgas entsprechend 3128 m³/d oder ca. 34400 kWh(Hₒ)/d als Erdgas.

Auf die zusätzliche partielle Oxidation von CH₄ (nach Reaktion 5) aus

Erdgas zur Erzeugung von zusätzlichem Synthesegas kann je nach Ausführungsform der Erfindung auch verzichtet werden unter Verzicht der entsprechenden Methanolproduktion.

Der dann überschüssige Sauerstoff 4.1 aus der Elektrolyse 105 von 0,499 Mol O₂ pro 1,666 Mol Modellgas kann zweckmäßig für die effektive Belüftung von Belebtschlammbecken oder in einem Belüftungstank der Kläranlage verwendet werden und damit entsprechend den Stromverbrauch für die sonst nötige Luftverdichtung vermindern. Das Einsetzen des überschüssigen Sauerstoffs 4.1 in der Kläranlage ist optional und zeigt, dass sich die Erfindung besonders vorteilhaft in das Umfeld einer solchen Kläranlage integrieren lässt.

Im Folgenden werden einige weitere technisch und wirtschaftlich sinnvolle Ausführungsformen der Erfindung beschrieben. Es handelt sich Verfahrensschritte und -wege zur Erzeugung von Synthesegas-Komponenten und zur anschließenden Methanolsynthese eventuell unter Zugabe weiterer Gaskomponenten werden im Folgenden beschrieben.

**Ausführungsform A2:** Es kann in einem Verfahrenschritt bzw. Anlageteil eine Abtrennung von CO₂ aus dem Modellgas erfolgen, wie das bereits bei der Aufbereitung von Biogas zu Bio-Erdgas praktiziert wird. Falls das Modellgas zu wenig CO₂ umfassen sollte, so kann in diesem Verfahrenschritt bzw. Anlageteil auch CO₂ aus einer externen zugefügt werden, um eine geeignete Stöchiometrie des Modellgases vorzugeben.

Zusätzlich wird in einem Verfahrenschritt bzw. Anlageteil die stöchiometrisch für die Methanolsynthese notwendige H₂-Menge gemäß der Reaktionen 9 und/oder 10 erzeugt. Zwei bevorzugte Wege zum Erzeugen der H₂-Menge wurden zuvor beschrieben. Bei Reaktion 9 (Elektrolyse) fällt zusätzlich Sauerstoff O₂ an, der für weitere Reaktionen zur Erzeugung von Synthesegas-Komponenten aus zusätzlichen Eingangsstoffen verwendet werden kann. In einem Verfahrenschritt bzw. Anlageteil erfolgt dann die Methanolsynthese gemäß Reaktion 1 und bei Erzeugung weiterer Synthesegas-Komponenten auch die Methanolsynthese gemäß Reaktion 2.

**Ausführungsform A3:** Es kann in einem Verfahrenschritt bzw. Anlageteil eine Verbrennung des Modellgases in einer Feuerung oder in einem Verbrennungsmotor (z.B. Gas-Ottomotor eines Blockheizkraftwerkes BHKW) erfolgen, wobei der CH4-Anteil des Modellgases entsprechend der Reaktion 4 vollständig oxidiert wird. Der dafür notwendige Sauerstoff O₂ stammt in der Regel aus atmosphärischer Verbrennungsluft (21 Vol.-% O₂, 79 Vol.-% ,Stickstoff N₂), kann aber bei einer Abwandlung der Ausführungsform A3 auch aus der Elektrolysereaktion 10 stammen (analog zum Ansatz der Oxyfuel-Verbrennung).

Es kann in einem Verfahrenschritt bzw. Anlageteil eine Abtrennung des CO₂ aus dem Verbrennungsgas (Rauchgas, Abgas) der Verbrennung des Modellgases erfolgen. Es ist ein Nachteil gegenüber der Ausführungsform A2, dass bei (üblicher) atmosphärischer Verbrennung die Konzentration des CO₂ im Gasgemisch wesentlich geringer ist. Dagegen ist die CO₂-Menge bei gleicher Modellgasmenge gegenüber der Ausführungsform A2 größer. In einem weiteren Verfahrenschritt bzw. Anlageteil erfolgt die Erzeugung der stöchiometrisch für die Methanolsynthese notwendigen H₂-Menge mit Hilfe der Reaktionen 9 und/oder 10. Bei Reaktion 9 (Elektrolyse) fällt zusätzlich Sauerstoff O₂ an, der für weitere Reaktionen zur Erzeugung von Synthesegas-Komponenten aus zusätzlichen Eingangsstoffen verwendet werden kann. In einem Verfahrenschritt bzw. Anlageteil erfolgt dann die Methanolsynthese gemäß Reaktion 1 und bei Erzeugung weiterer Synthesegas-Komponenten auch die Methanolsynthese gemäß Reaktion 2.

**Ausführungsform A4:** Es kann in einem Verfahrenschritt bzw. Anlageteil eine CO₂-Reformierung (Reaktion 3) zwischen dem CH4 und dem CO₂ im Modellgases erfolgen. Ausgangsseitig der CO₂-Reformierung erfolgt dann in einem Verfahrenschritt bzw. Anlageteil eine Überführung des nach der CO₂-Reformierung (Reaktion 3) noch verbliebenen CH4-Anteils des Modellgases in Synthesegas. Dies geschieht über eine Dampf-Reformierung (Reaktion 7) und/oder mit Sauerstoff O₂ auf dem Wege über eine partielle Oxidation (Reaktion 5). Der Sauerstoff, der hier in der Ausführungsform A4 eingesetzt wird, stammt vorzugsweise aus der Elektrolysereaktion 9.

Die endotherme Dampf-Reformierung und die exotherme partielle Oxidation können bei Ausführungsform A4 und auch bei anderen Ausführungsformen der Erfindung energetisch vorteilhaft zur autothermen Reformierung in einem Reaktor kombiniert werden.

Bei der Ausführungsform A4 erfolgt in einem Verfahrenschritt bzw. Anlageteil die Erzeugung der stöchiometrisch für die Methanolsynthese notwendigen H₂-Menge mit Hilfe der Reaktionen 9 und/oder 10. Bei Reaktion 9 (Elektrolyse) fällt zusätzlich Sauerstoff O₂ an, dessen einer Teil für die partielle Oxidation des verbliebenen CH4 des Modellgases verwendet werden kann (wie bereits erwähnt), und dessen anderer Teil aber für die partielle Oxidation von zusätzlich zugeführten Kohlenwasserstoffen (z.B. Erdgas) zur zusätzlichen Erzeugung von Synthesegas-Komponenten gemäß Reaktion 5 dienen kann.

Weitere bei der Ausführungsform A4 und anderen Ausführungsformen zusätzlich zugeführte Kohlenwasserstoffe können über die Dampfreformierung (Reaktion 7) in zusätzliche Synthesegas-Komponenten übergeführt werden, wobei in der Kombination der Reaktionen 5 und 7 autothermes Reformieren anzustreben ist. Durch die zusätzlich zugeführten Kohlenwasserstoffe wird die Ausbeute an Methanol entsprechend erhöht, und bei niedrigen Kohlenwasserstoffkosten werden die Methanolkosten entsprechend verringert. Außerdem kann durch die zusätzlich zugeführten Kohlenwasserstoffe auch bei zeitlich diskontinuierlichem Elektrolysebetrieb der Gesamtanlagen-Betrieb - einer Chemieanlage angemessen - vergleichmäßigt und die Gesamtanlagen-Betriebsdauer praktisch beliebig festgelegt werden.

Bei der Ausführungsform A4 erfolgt in einem Verfahrenschritt bzw. Anlageteil dann die Methanolsynthese, wobei die Methanolsynthese im Wesentlichen gemäß Reaktion 2 vorgenommen wird.

Bei den Ausführungsformen A2, A3 und A4 nimmt der mit Hilfe der Reaktionen 9 und/oder 10 erzeugter Wasserstoff H₂ nicht an den Reaktionen zur Erzeugung anderer Synthesegas-Komponenten teil, sondern er wird direkt dem Methanolsynthese-Reaktor zugeführt.

Mit den beschriebenen Reaktionen kann regeneratives Methanol 108 hergestellt werden auf der Basis von Biogas/Klärgas, von Wasserstoff 103.1 aus einem Hydrogenprozess 400 oder Wasserstoff 103.2 aus einer Elektrolyse 105, wobei Kohlendioxid aus externen Quellen und ggf. aus Erdgas eingesetzt werden kann. Bei Bedarf kann zusätzlich Erdgas zum Einsatz kommen, wie beschrieben.

Durch Variation der dem Reaktor/den Reaktoren zur Erzeugung von Synthesegas-Komponenten zugeführten Sauerstoff- und Wasserdampf-Massenströme kann nicht nur die Energiebilanz des Reaktors/der Reaktoren beeinflusst werden, sondern vor allem kann über die Dampf-Reformierung (Reaktion 7) gezielt ein Wasserstoffüberschuss bezüglich der Methanolsynthese-Reaktionen 1-2 bewirkt werden, womit ein diesbezüglicher Wasserstoffmangel z.B. aus der CO₂-Reformierung (Reaktion 3) ausgeglichen werden kann.

Somit bieten die beschriebenen verschiedenen Ausgangsenergien und -stoffe und die unterschiedlichen Reaktionen der Erzeugung von Synthesegas-Komponenten einerseits und der Methanolsynthese andererseits eine Fülle von Eingriffs- und Regelmöglichkeiten für den Gesamtprozess zur Herstellung von regenerativem Methanol zu dessen betrieblicher und wirtschaftlicher Optimierung.

## Patentansprüche

1. Vorrichtung (100) zum Herstellen von regenerativem Methanol (108) auf der Basis von Kohlendioxid haltigem Methangas (10), wobei die Vorrichtung (100) umfasst:
- einen CO₂-Reformer (300), der mit dem Kohlendioxid haltigen Methangas (10) speisbar ist, wobei der CO₂-Reformer (300) einen Ausgangsbereich (303) aufweist, in dem ein erstes Synthesegas (114) bereit gestellt wird, wobei der CO₂-Reformer (300) eine Reaktionskammer (301) umfasst, die dazu ausgelegt ist im Bereich des Atmosphärendrucks betrieben zu werden und wobei der CO₂-Reformer (300) Mittel umfasst, die es ermöglichen, eine Temperatur für die katalytische Umwandlung des Kohlendioxid haltigen Methangases (10) im Bereich zwischen 350 und 900 °C bereit zu stellen,
- einen ersten Methanol-Synthesereaktor (50), der mit einem Einsatzgas speisbar ist, das dem ersten Synthesegas (114) entspricht oder das aus diesem gewonnen wird, wobei der Methanol-Synthesereaktor (50) zur exothermen katalytischen Synthese (106.1, 106.2) von regenerativem Methanol (108) ausgelegt ist,
wobei Faulgas (1.1), Klärgas (1.2), Sumpfgas (1.3), Fermentationsgas (1.4) oder Sauer-Erdgas (2) oder eine Mischung aus mindestens zwei dieser Gase (1.1, 1.2, 1.3, 1.4, 2) als Kohlendioxid haltiges Methangas (10) zum Einsatz kommt und wobei die Vorrichtung (100) eine Mischanlage (20) aufweist, um aus dem Kohlendioxid haltigen Methangas/en (10) ein Modellgas zu erhalten, das mindestens 50 Vol.-% Methan und mindestens 30 Vol.-% CO₂ umfasst.

2. Vorrichtung (100) nach Anspruch 1, **dadurch gekennzeichnet, dass** der CO₂-Reformer (300) zum Durchführen eines CO₂-Trocken-Reformationsverfahrens ausgelegt ist.

3. Vorrichtung (100) nach Anspruch 1 oder 2, **dadurch gekennzeichnet, dass** der CO₂-Reformer (300) einen Platin-basierten oder einen Palladiumbasierten Katalysator (302) umfasst, der dazu ausgelegt ist eine katalytische Umwandlung des Kohlendioxid haltigen Methangases (10) in Richtung des ersten Synthesegases (114) zu unterstützen, wobei der CO₂-Reformer (300) einen Eingang (304) zum Einbringen von Sauerstoff (4.1) umfasst.

4. Vorrichtung (100) nach Anspruch 1, **dadurch gekennzeichnet, dass** das Modellgas 60 Vol.-% Methan und 40 Vol.-% CO₂ umfasst.

5. Vorrichtung (100) nach einem der Ansprüche 1 bis 3, **dadurch gekennzeichnet, dass** Sauer-Erdgas (2) als Kohlendioxid haltiges Methangas (10) zum Einsatz kommt, wobei die Vorrichtung (100) eine Mischanlage (20) umfasst, die das Sauer-Erdgas (2) mit zusätzlich bereitgestelltem CO₂-Gas zusammen bringt, um ein Modellgas zu erhalten, das mindestens 50 Vol.-% Methan und mindestens 30 Vol.-% CO₂ umfasst, wobei das Modellgas vorzugsweise 60 Vol.-% Methan und 40 Vol.-% CO₂ umfasst.

6. Vorrichtung (100) nach einem der Ansprüche 1 bis 3, **dadurch gekennzeichnet, dass** sie eine Zufuhr (101) für Kohlendioxid haltiges Methangas (10) aufweist, das einen natürlichen Gehalt an CO₂-Gas, vorzugsweise in Form von biogenem CO₂-Gas, umfasst.

7. Vorrichtung (100) nach einem der Ansprüche 1 bis 3, **dadurch gekennzeichnet, dass** Biogas (1) als Kohlendioxid haltiges Methangas (10) zum Einsatz kommen, wobei die Vorrichtung (100) eine Zufuhr (101) für das Biogas (1) umfasst, und wobei in der Vorrichtung (100) ein Modellgas bereitgestellt wird, das mindestens 50 Vol.-% biogenes Methan und mindestens 30 Vol.-% biogenes CO₂ umfasst, und wobei das Modellgas vorzugsweise 60 Vol.-% biogenes Methan und 40 Vol.-% biogenes CO₂ umfasst.

8. Vorrichtung (100) nach einem der Ansprüche 1 bis 3, **dadurch gekennzeichnet, dass** sie eine Vorrichtung (300) zur Dampf-Reformierung umfasst, die mit Methan und Wasser oder Wasserdampf speisbar ist.

9. Vorrichtung (100) nach Anspruch 8, **dadurch gekennzeichnet, dass** sie eine Trennvorrichtung umfasst, um einen Methananteil aus dem Kohlendioxid haltigen Methangas (10) gewinnen zu können, wobei dieser Methananteil zum Speisen der Vorrichtung (300) zur Dampf-Reformierung einsetzbar ist.

10. Vorrichtung (100) nach einem der Ansprüche 1 bis 7, **dadurch gekennzeichnet, dass** sie eine Wasserstoffgaszufuhr (120) und eine Steuerung (110) umfasst, die dazu ausgelegt ist, Wasserstoffgas (103.2)
- mit dem ersten Synthesegas (114) zusammenzubringen, und/oder
- dem ersten Methanol-Synthesereaktor (50) zuzuführen, und/oder
- in einem Zwischenschritt einem Synthesegas (114) der Vorrichtung (100) beizumengen
um eine oder mehrere der Verfahren oder Anlagenteile der Vorrichtung (100) mit einem Gas der geeigneten Stöchiometrie speisen zu können.

11. Vorrichtung (100) nach einem der Ansprüche 1 bis 8, **dadurch gekennzeichnet, dass** sie eine Steuerung (110) umfasst, die vorzugsweise ein Regelsystem bildet, und die dazu ausgelegt ist die Volumenströme eines CO₂-Gases, eines Wasserstoffgases (103) und des Kohlendioxid haltigen Methangases (10) zur Einstellung eines stöchiometrischen Gleichgewichtes zu verwenden.

12. Vorrichtung (100) nach einem der Ansprüche 1 bis 11, **dadurch gekennzeichnet, dass** sie einen Anlagenteil (350) umfasst, der einen Ausgangsbereich aufweist in dem mindestens zwei der folgenden Gase bereit gestellt werden können: CO₂, CO und H₂.

13. Vorrichtung (100) nach einem der Ansprüche 1 bis 11, **dadurch gekennzeichnet, dass** sie eine Elektrolysevorrichtung (150) umfasst, die dazu ausgelegt ist eine Wasser-Elektrolyse (105) durchzuführen, wobei Elektrolyse-Wasserstoff (103.2) aus der Wasser-Elektrolyse (105) in einem anderen Anlageteil der Vorrichtung (100) einsetzbar ist.

14. Vorrichtung (100) nach Anspruch 13, **dadurch gekennzeichnet, dass** Elektrolyse-Sauerstoff (4.1), der beim Durchführen der Wasser-Elektrolyse (105) anfällt, für eine zusätzliche Synthesegaserzeugung mit Methan oder anderen Kohlenwasserstoffen durch partielle Oxidation einsetzbar ist.

15. Vorrichtung (100) nach Anspruch 13, **dadurch gekennzeichnet, dass** Elektrolyse-Sauerstoff (4.1), der beim Durchführen der Wasser-Elektrolyse (105) anfällt, zur Belüftung von Belebtschlammbecken oder für andere Sauerstoffbedürfnisse einer Kläranlage oder Biogasanlage, z.B. auch Einblasen in den Fermenter zur Fermenter internen biologischen Entschwefelung des Biogases, einsetzbar ist.

16. Vorrichtung (100) nach einem der Ansprüche 1 bis 15 **dadurch gekennzeichnet, dass** das "regenerative" Methanol (108) ein Treibhausgas-Minderungspotential gegenüber fossilen Vergleichskraftstoffen aufweist, das mindestens 35 % und vorzugsweise mindestens 50 % beträgt und besonders vorzugsweise mindestens 60 % beträgt.

## Claims

1. Apparatus (100) for producing regenerative methanol (108) based on methane gas (10) containing carbon dioxide, wherein the apparatus (100) comprises:
- a CO₂ reformer (300), which is feedable with the carbon-dioxide-containing methane gas (10), wherein the CO₂ reformer (300) has an output region (303) in which a first synthesis gas (114) is provided, wherein the CO₂ reformer (300) comprises a reaction chamber (301), designed to operate in the atmospheric pressure range, and wherein the CO₂ reformer (300) comprises means for providing a temperature for catalytic conversion of the carbon-dioxide-containing methane gas (10) in the range between 350°C and 900°C,
- a first methanol synthesis reactor (50), which is feedable with a feed gas corresponding to or recovered from the first synthesis gas (114), wherein the methanol synthesis reactor (50) is adapted for exothermic catalytic synthesis (106.1, 106.2) of regenerative methanol (108), wherein digester gas (1.1), sewage gas (1.2), sump gas (1.3), fermentation gas (1.4) or acid natural gas (2) or a mixture of at least two of these gases (1.1, 1.2, 1.3, 1.4, 2) is used as carbon-dioxide-containing methane gas (10), and wherein the apparatus (100) has a mixing plant (20) for obtaining from the carbon-dioxide-containing methane gas or gases (10) a model gas which contains at least 50 vol.% methane and at least 30 vol.% CO₂.

2. Apparatus (100) according to claim 1, **characterized in that** the CO₂ reformer (300) is adapted to perform a CO₂ dry reforming process.

3. Apparatus (100) according to claim 1 or 2, **characterized in that** the CO₂ reformer (300) comprises a platinum-based or a palladium-based catalyst (302) adapted to assist catalytic conversion of the carbon-dioxide-containing methane gas (10) in the direction towards the first synthesis gas (114), wherein the CO₂ reformer (300) comprises an input (304) for introducing oxygen (4.1).

4. Apparatus (100) according to claim 1, **characterized in that** the model gas comprises 60 vol.% methane and 40 vol.% CO₂.

5. Apparatus (100) according to one of the claims 1 to 3, **characterized in that** acid natural gas (2) is used as carbon-dioxide-containing methane gas (10), wherein the apparatus (100) comprises a mixing plant (20) which brings the acid natural gas (2) together with additionally provided CO₂ gas to obtain a model gas comprising at least 50 vol.% methane and at least 30 vol.% CO₂, wherein the model gas preferably comprises 60 vol.% methane and 40 vol.% CO₂.

6. Apparatus (100) according to one of the claims 1 to 3, **characterized in that** it comprises a supply (101) for carbon-dioxide-containing methane gas (10), having a natural content of CO₂ gas, preferably in the form of biogenic CO₂ gas.

7. Apparatus (100) according to one of the claims 1 to 3, **characterized in that** biogas (1) is used as carbon-dioxide-containing methane gas (10), wherein the apparatus (100) comprises a supply (101) for the biogas (1), and wherein a model gas is provided in the apparatus (100), which comprises at least 50 vol.% biogenic methane and at least 30 vol.% biogenic CO₂, and wherein the model gas preferably comprises 60 vol.% biogenic methane and 40 vol.% biogenic CO₂.

8. Apparatus (100) according to one of the claims 1 to 3, **characterized in that** it comprises a steam reforming apparatus (300) which is feedable with methane and water or water vapor.

9. Apparatus (100) according to claim 8, **characterized in that** it comprises a separation apparatus in order to allow recovering a methane content from the carbon-dioxide-containing methane gas (10), wherein this methane content is suitable for feeding the steam reforming apparatus (300).

10. Apparatus (100) according to one of the claims 1 to 7, **characterized in that** it comprises a hydrogen gas supply (120) and a controller (110) designed to merge the hydrogen gas (103.2)
- with the first synthesis gas (114), and/or
- to supply said gas to the first methanol synthesis reactor (50), and/or
- in an intermediate step, add a synthesis gas (114) to the apparatus (100)
in order to enable the supply of a gas of suitable stoichiometry to one or more of the processes or plant components of the apparatus (100).

11. Apparatus (100) according to one of the claims 1 to 8, **characterized in that** it comprises a controller (110) which preferably forms a control system and is designed to use the volume flows of a CO₂ gas, a hydrogen gas (103) and the carbon-dioxide-containing methane gas (10) to adjust a stoichiometric equilibrium.

12. Apparatus (100) according to one of the claims 1 to 11, **characterized in that** it comprises an installation part (350) having an outlet region in which at least two of the following gases can be provided: CO₂, CO and H₂.

13. Apparatus (100) according to one of the claims 1 to 11, **characterized in that** it comprises an electrolysis apparatus (150) designed to perform water electrolysis (105), wherein electrolysis hydrogen (103.2) from the water electrolysis (105) can be used in another installation part of the apparatus (100).

14. Apparatus (100) according to claim 13, **characterized in that** electrolysis oxygen (4.1), which is produced when carrying out the water electrolysis (105), can be used for an additional synthesis gas generation with methane or other hydrocarbons by partial oxidation.

15. Apparatus (100) according to claim 13, **characterized in that** electrolysis oxygen (4.1), which is produced when the water electrolysis (105) is carried out, can be used for aerating activated sludge basins or for other oxygen requirements of a sewage treatment plant or biogas plant, e.g. also for blowing into the fermenter for fermenter-internal biological desulphurization of the biogas.

16. Apparatus (100) according to one of the claims 1 to 15, **characterized in that** the "regenerative" methanol (108) has a greenhouse gas reduction potential compared with fossil reference fuels which is at least 35% and preferably at least 50% and particularly preferably at least 60%.

## Revendications

1. Dispositif (100) pour fabriquer du méthanol régénératif (108) sur la base de gaz méthane contenant du dioxyde de carbone (10), le dispositif (100) comprenant :
- un réformeur de CO₂ (300) qui peut être alimenté avec le gaz méthane contenant du dioxyde de carbone (10), le réformeur de CO₂ (300) présentant une zone de sortie (303) dans laquelle il est fourni un premier gaz de synthèse (114), le réformeur de CO₂ (300) comprenant une chambre de réaction (301) qui est conçue pour être utilisée dans la plage de la pression atmosphérique, et le réformeur de CO₂ comprenant des moyens (300) qui permettent de fournir une température pour la conversion catalytique du gaz méthane contenant du dioxyde de carbone (10) dans la plage entre 350 et 900 °C,
- un premier réacteur de synthèse de méthanol (50) qui peut être alimenté avec un gaz d'alimentation qui correspond au premier gaz de synthèse (114) ou qui est obtenu à partir de ce dernier, le réacteur de synthèse de méthanol (50) étant conçu pour réaliser une synthèse catalytique exothermique (106.1, 106.2) de méthanol régénératif (108),
dans lequel il est utilisé comme gaz méthane contenant du dioxyde de carbone (10) un gaz de curage (1.1), un gaz d'épuration (1.2), un gaz des marais (1.3), un gaz de fermentation (1.4) ou un gaz naturel acide (2) ou un mélange d'au moins deux de ces gaz (1.1, 1.2, 1.3, 1.4, 2), et dans lequel le dispositif (100) présente une installation de mélange (20) pour obtenir à partir du gaz méthane contenant du dioxyde de carbone (10) un gaz modèle qui comprend au moins 50 % en volume de méthane et au moins 30 % en volume de CO₂.

2. Dispositif (100) selon la revendication 1, **caractérisé en ce que** le réformeur de CO₂ (300) est conçu pour effectuer un procédé de reformage à sec de CO₂.

3. Dispositif (100) selon la revendication 1 ou 2, **caractérisé en ce que** le réformeur de CO₂ (300) comprend un catalyseur à base de platine ou à base de palladium (302) qui est conçu pour favoriser une conversion catalytique du gaz méthane contenant du dioxyde de carbone (10) dans le sens du premier gaz de synthèse (114), le réformeur de CO₂ (300) comprenant une entrée (304) pour amener de l'oxygène (4.1).

4. Dispositif (100) selon la revendication 1, **caractérisé en ce que** le gaz modèle comprend 60 % en volume de méthane et 40 % en volume de CO₂.

5. Dispositif (100) selon l'une des revendications 1 à 3, **caractérisé en ce qu'**on utilise comme gaz méthane contenant du dioxyde de carbone (10) un gaz naturel acide (2), le dispositif (100) comprenant une installation de mélange (20) qui rassemble le gaz naturel acide (2) avec du gaz CO₂ fourni en plus pour obtenir un gaz modèle qui comprend au moins 50 % en volume de méthane et au moins 30 % en volume de CO₂, le gaz modèle comprenant de préférence 60 % en volume de méthane et 40 % en volume de CO₂.

6. Dispositif (100) selon l'une des revendications 1 à 3, **caractérisé en ce qu'**il présente une alimentation (101) pour le gaz méthane contenant du dioxyde de carbone (10) qui comprend une teneur naturelle en gaz CO₂, de préférence sous forme de gaz CO₂ biogène.

7. Dispositif (100) selon l'une des revendications 1 à 3, **caractérisé en ce qu'**il est utilisé comme gaz méthane contenant du dioxyde de carbone (10) du biogaz (1), le dispositif (100) comprenant une alimentation (101) pour le biogaz (1), et un gaz modèle étant fourni dans le dispositif (100), le gaz modèle comprenant au moins 50 % en volume de méthane biogène et au moins 30 % en volume de CO₂ biogène, et le gaz modèle comprenant de préférence 60 % en volume de méthane biogène et 40 % en volume de CO₂ biogène.

8. Dispositif (100) selon l'une des revendications 1 à 3, **caractérisé en ce qu'**il comprend un dispositif (300) pour le reformage de vapeur qui peut être alimenté avec du méthane et de l'eau ou de la vapeur d'eau.

9. Dispositif (100) selon la revendication 8, **caractérisé en ce qu'**il comprend un dispositif de séparation pour pouvoir obtenir une part de méthane à partir du gaz méthane contenant du dioxyde de carbone (10), cette part de méthane pouvant être utilisée pour alimenter le dispositif (300) pour le reformage de vapeur.

10. Dispositif (100) selon l'une des revendications 1 à 7, **caractérisé en ce qu'**il comprend une alimentation de gaz hydrogène (120) et une commande (110) qui est conçue pour
- rassembler le gaz hydrogène (103.2) avec le premier gaz de synthèse (114), et/ou
- amener le gaz hydrogène (103.2) au premier réacteur de synthèse de méthanol (50), et/ou
- mélanger le gaz hydrogène (103.2) dans une étape intermédiaire à un gaz de synthèse (114) du dispositif (100),
pour pouvoir alimenter un ou plusieurs des procédés ou parties d'installation du dispositif (100) avec un gaz ayant la stoéchiométrie adéquate.

11. Dispositif (100) selon l'une des revendications 1 à 8, **caractérisé en ce qu'**il comprend une commande (110) qui forme de préférence un système de régulation et qui est conçue pour utiliser les débits volumiques d'un gaz CO₂, d'un gaz hydrogène (103) et du gaz méthane contenant du dioxyde de carbone (10) pour régler un équilibre stoéchiométrique.

12. Dispositif (100) selon l'une des revendications 1 à 11, **caractérisé en ce qu'**il comprend une partie d'installation (350) qui présente une zone de sortie dans laquelle il peut être fourni au moins deux des gaz suivants : CO₂, CO et H₂.

13. Dispositif (100) selon l'une des revendications 1 à 11, **caractérisé en ce qu'**il comprend un dispositif d'électrolyse (150) qui est conçu pour réaliser une électrolyse de l'eau (105), l'hydrogène d'électrolyse (103.2) issu de l'électrolyse de l'eau (105) pouvant être utilisé dans une autre partie d'installation du dispositif (100).

14. Dispositif (100) selon la revendication 13, **caractérisé en ce que** l'oxygène de l'électrolyse (4.1) qui résulte de la réalisation de l'électrolyse de l'eau (105) peut être utilisé pour la production supplémentaire de gaz de synthèse avec du méthane ou autres hydrocarbures par oxydation partielle.

15. Dispositif (100) selon la revendication 13, **caractérisé en ce que** l'oxygène de l'électrolyse (4.1) qui résulte de la réalisation de l'électrolyse de l'eau (105) peut être utilisé pour ventiler des bassins à boues activées ou pour d'autres besoins d'oxygène d'une installation d'épuration ou installation de biogaz, par ex. aussi injecter dans le fermenteur pour une désulfurisation biologique interne du biogaz.

16. Dispositif (100) selon l'une des revendications 1 à 15, **caractérisé en ce que** le méthanol « régénératif « (108) présente un potentiel de réduction des gaz à effet de serre par rapport aux combustibles fossiles comparables, lequel potentiel s'élève à au moins 35 %, de préférence à au moins 50 %, et de façon particulièrement préférée à au moins 60 %.
